# EUROPEAN PATENT APPLICATION

(11) **EP 4 560 810 A1**
(43) Date of publication of application: **28.05.2025**
(21) Application number: 24819529.9
(22) Date of filing: 29.05.2024
(51) Int. Cl.: H01M 50/264, H01M 50/289, H01M 10/653, H01M 10/6551, H01M 50/204

(54) **BATTERY PACK**

(30) Priority: 07.06.2023 KR 20230072978
(71) Applicant: LG Energy Solution, Ltd., Seoul 07335 (KR)
(72) Inventor: LEE, Jae Hyun, Daejeon 34122 (KR)
(74) Representative: Plasseraud IP
(86) International application number: PCT/KR2024/007280
(87) International publication number: WO 2024/253377

(57) **Abstract**

A battery pack includes a pack case provided with a base plate, a plurality of cell units mounted on top of the base plate, and a thermal resin and a TIM pad are interposed in parallel between the bottom surface of each cell unit and the base plate to fix the cell unit. An adhesion of the TIM pad is small compared to an adhesion of the thermal resin.

## Description

### [Technical Field]

The present invention relates to a battery pack, and more particularly to a battery pack that enables replacement of a portion of a plurality of battery cells mounted in the battery pack when a problem occurs, thereby extending the life of the battery pack with minimal maintenance without the need to dispose of the entire battery pack.

This application claims the benefit of priority to Korean Patent Application No. 10-2023-0072978, filed on June 7, 2023, the disclosure of which is incorporated herein by reference in its entirety.

### [Background Art]

In order to improve the space utilization rate of battery packs, a cell-to-pack structure has been proposed. The cell-to-pack structure has the advantage of improving the space utilization rate of the battery pack by assembling a plurality of battery cells directly into the battery pack without modularization.

As separate module housings are omitted or simplified in cell-to-pack structures, new structures are being proposed for efficiently mounting a plurality of battery cells in a pack case. For example, a cell unit (corresponding to a conventional battery module) with a plurality of battery cells as a group can be coupled to side frames to design a structure that takes over the role of a conventional pack cross beam (meaning a cross beam that is integral to the pack case) by ensuring that the side frames of adjacent cell units are joined together and have sufficient rigidity.

In addition, by eliminating the need for a separate module housing, thermal resin may be interposed between the bottom surface of the cell unit, where the battery cells are exposed, and the base plate of the pack case to facilitate the conduction heat dissipation of the cell unit, and to further rigidly fix the cell unit by curing the thermal resin.

However, a battery pack structure in which the cell units are further fixed by curing a thermal resin has many advantages in terms of a cell-to-pack structure, such as improved space utilization of the battery pack by assembling a plurality of battery cells directly into the battery pack without a modularization structure, and improved heat dissipation performance by heat conduction compared to a structure with an additional layer of module housing, but it has disadvantages in terms of maintenance of the battery pack. In other words, such a cell-to-pack structure makes it very difficult to disassemble the battery pack into cell units once assembled. For example, the curing of the thermal resin to fix the bottom surface of the cell unit can lead to the breakage of the battery cells bonded to the thermal resin when the cell unit is removed, which can lead to quite dangerous consequences such as electrolyte leakage.

There is a strong need to develop a battery pack with a cell-to-pack structure that can be easily disassembled into cell units, allowing the battery pack to be maintained by replacing the cell unit even if only one battery cell in the battery pack fails, thereby allowing the battery pack to be utilized for its designed lifetime without having to dispose of expensive battery packs.

### [Related-Art Document]

### [Patent Document]

(Patent Document 1) Korean Registered Patent Publication No. 10-2021-0113899 (published on Sep. 17, 2021)

### [Summary]

### [Technical Problem]

The present invention aims to provide a battery pack having a cell-to-pack structure, wherein any cell unit can be easily removed regardless of the order of assembly, thereby facilitating the replacement of a faulty battery cell.

However, the technical problems that the present invention seeks to address are not limited to the problems described above, and other problems not mentioned will be apparent to those of ordinary skill in the art from the description of the invention set forth below.

### [Technical Solution]

The present invention relates to a battery pack, which in one example includes: a pack case including a base plate, a plurality of cell units mounted on an upper surface of the base plate, a thermal resin interposed between a bottom surface of each cell unit and the base plate, and a thermal interface material (TIM) pad interposed between the bottom surface of each cell unit and the base plate to fix the cell unit. An adhesion of the TIM pad is small compared to an adhesion of the thermal resin, and the thermal resin and the TIM pad are disposed on different areas of the upper surface of the base plate.

Each thermal resin may be applied along a perimeter of a corresponding TIM pad.

The adhesion strength of the cell unit to the base plate is adjusted as an area ratio between an adhesive area of the thermal resin and an adhesive area of the TIM pad.

The thermal resin may be a curable adhesive layer, and the TIM pad may be a non-curable adhesive layer.

In an exemplary embodiment, the adhesive area of the TIM pad may occupy 60 to 90% of a total area of the bottom surface of the cell unit.

For each cell unit, the TIM pad may be provided as a pair of TIM pads, and the pair of TIM pads are spaced apart from each other and may be disposed on the bottom surface of the cell unit.

In this case, for each cell unit, the thermal resin is applied along each perimeter of the pair of TIM pads and may be isolated from each other.

Meanwhile, in the battery pack of the present invention, the pack case includes a cross beam coupled to the base plate to transversely compartmentalize a receiving space within the base plate, and each cell unit includes a side frame fixed to the cross beam, wherein the side frames of adjacent cell units along a longitudinal direction share an upper surface of the cross beam located therebetween and may not overlap each other up and down.

Each side frame includes a side plate wrapping around a side of the cell unit, and a support block protruding from the side plate. The support blocks of adjacent cell units along the longitudinal direction may occupy regions that do not overlap each other on the upper surface of the cross beam.

For example, the support block is provided as a plurality of support blocks spaced apart from each other. The plurality of support blocks of adjacent cell units along the longitudinal direction may be arranged alternately on the upper surface of the cross beam.

In addition, each cell unit may be fixed to the cross beam by bolts vertically penetrating the support block.

### [Advantageous Effects]

In the battery pack of the present disclosure having the above configuration, the adhesion for fixing the cell unit to the base plate is provided by both the thermal resin and the TIM pad, and by limiting the adhesion area of the curable thermal resin so that it is only locally adhered to the bottom surface of the cell unit, it becomes easier to remove the faulty cell unit from the battery pack, and thereby the entire battery pack can be maintained, repaired, and reused without disposal.

In particular, the battery pack of the present disclosure is applicable to a cell-to-pack structure, where heat dissipation through the bottom surface of the cell unit is sufficiently increased by both the thermal resin and the TIM pad, while the adhesion area of the non-curable TIM pad with relatively low adhesion can be adjusted to facilitate the design of the fixation strength to a level that is robust but allows later detachment of the cell unit.

And by designing the side frames of each cell unit to share an upper surface of a single cross beam but not stacked on top of each other, if a problem occurs with only one cell unit in an assembled battery pack, a faulty cell unit can be easily removed regardless of the order of assembly.

However, the technical effects of the present invention are not limited to those described above, and other effects not mentioned will be apparent to those of ordinary skill in the art from the description of the invention set forth below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating a fixed structure of a cell unit in a battery pack according to the present invention.
FIG. 2 is a cross-sectional view cut along the line "A-A" in FIG. 1.
FIG. 3 is an exemplary drawing illustrating the removal of the cell unit of FIG. 2 from the battery pack.
FIG. 4 is a drawing illustrating an exemplary installation structure of thermal resin and TIM pads.
FIG. 5 is a drawing illustrating a mounting structure for a cell unit according to one embodiment of the present invention.
FIG. 6 is a plan view of a battery pack according to an embodiment of FIG. 5.

### [Detailed Description]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention relates to a battery pack, which in one example includes: a pack case provided with a base plate; and a plurality of cell units mounted on top of the base plate, wherein a thermal resin and a TIM pad are interposed in parallel between the bottom surface of the cell unit and the base plate to fix the cell unit, and the adhesion of the TIM pad is small compared to the adhesion of the thermal resin.

In the battery pack of the present invention with such a configuration, the adhesion for fixing the cell unit to the base plate is provided by both the thermal resin and the TIM pad, and by limiting the adhesion area of the curable thermal resin so that it is only locally adhered to the bottom surface of the cell unit, it becomes easier to remove the faulty cell unit from the battery pack, thereby enabling it to be maintained, repaired and reused without disposing of the entire battery pack.

### [Mode for Practicing the Invention]

Hereinafter, with reference to the accompanying drawings, a specific embodiment of a battery pack 10 according to the present invention will be described in detail. For reference, the directions of front to back, up and down, and left and right used in the following description to designate relative positions are intended to aid in the understanding of the invention and refer to the directions shown in the drawings unless otherwise defined.

### [First embodiment]

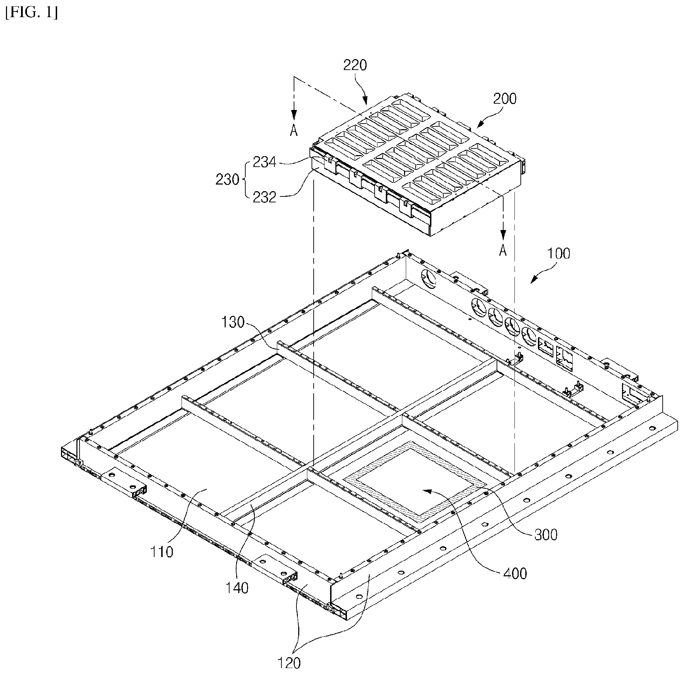

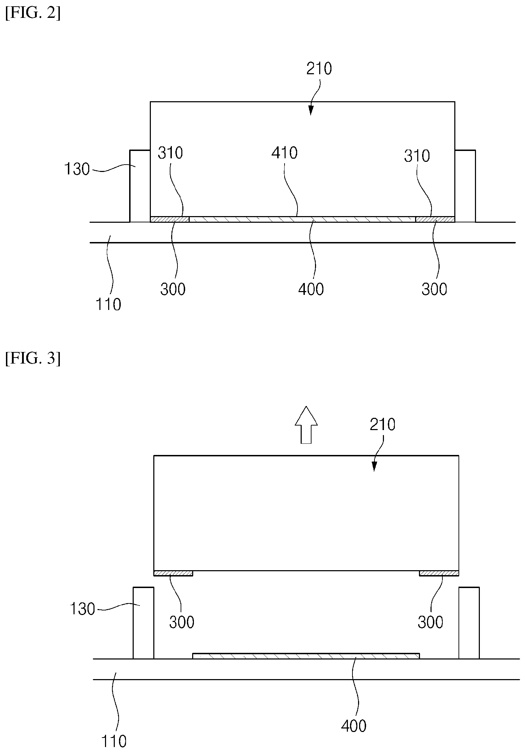

FIG. 1 is a drawing illustrating a fixed structure of a cell unit 200 in a battery pack 10 according to the present invention, and FIG. 2 is a cross-sectional view cut along the line "A-A" in FIG. 1.

The present invention relates to a battery pack 10, including a pack case 100 and a plurality of cell units 200 mounted in the pack case 100. As used herein, the cell unit 200 refers to a unit of a plurality of battery cells 210 fixed together as a group, and includes structures for making the plurality of battery cells 210 into a unit. For example, the cell unit 200 may include a busbar frame assembly 220 that mechanically and electrically couples the plurality of battery cells 210 at transverse ends from which the leads of the battery cells 210 protrude, and a side frame 230 that protects the battery cells 210 on both longitudinal sides. And, in order for the cell unit 200 shown to be suitable for a battery pack 10 of a cell-to-pack structure, the battery cells 210 are exposed on the bottom surface without any additional structure.

The pack case 100 includes a base plate 110, which is a bottom plate. The base plate 110 supports the bottom surface of the cell unit 200 and serves to absorb heat from the bottom surface of the cell unit 200 in the form of heat conduction and dissipate it to the outside. The base plate 110 itself may have a heat sink built into it, or a separate heat sink may be bonded to its bottom surface to allow the absorbed heat to be dissipated to the outside via a coolant. The configuration of the heat sink itself is not critical to the present disclosure, and therefore will not be described or illustrated.

The plurality of cell units 200 mounted on the base plate 110, as one of the fixing structures for the pack case 100, may have a thermal resin 300 having excellent thermal conductivity applied to its bottom surface. The thermal resin 300 has the properties of a viscous gel at the time of application, but hardens into a solid after a period of time due to exposure to air. As a result of this curing of the thermal resin 300, the bottom surface of the cell unit 200 is firmly fixed to the base plate 110.

However, this curing of the thermal resin 300 may securely fix the cell unit 200 in place, but hinder its removal from the battery pack 10 if the cell unit 200 fails. In many cases, it is nearly impossible to remove a cell unit 200 that is bonded with thermal resin 300, or even if it is removed, it may cause damage to itself, other cell units 200 in the vicinity, or even the pack case 100. Because of this, battery pack 10 that cannot be repaired has had to be discarded in its entirety.

The battery pack 10 of the present invention is intended to solve these problems, and is characterized in that between the bottom surface of the cell unit 200 and the base plate 110, a thermal resin 300 and a TIM pad 400 are interposed in parallel to fix the cell unit 200, wherein the adhesion of the TIM pad 400 is small compared to the adhesion of the thermal resin 300.

The parallel interposing of the thermal resin 300 and the TIM pad 400 means that the adhesive surface between the bottom surface of the cell unit 200 and the upper surface of the base plate 110 is partly composed of the thermal resin 300 and partly composed of the TIM pad 400, rather than the thermal resin 300 and the TIM pad 400 being laminated from top to bottom (serial interposing). This can be clearly understood with reference to FIGS. 1 and 2.

The TIM pad 400 refers to a slightly resilient pad on which a thermally conductive thermal interface material (TIM) is applied or embedded, usually with an adhesive layer on both sides (e.g., double-sided adhesive tape is attached to both sides of the pad), which is functionally identical to the thermal resin 300, having a high thermal conductivity and conducting heat rapidly. The TIM pad 400 has an adhesive layer on both sides that is attached to the bottom surface of the cell unit 200 and the upper surface of the base plate 110, respectively, and couples the two very weakly compared to the thermal resin 300. Therefore, the TIM pad 400 alone is insufficient to fix the cell unit 200 to the base plate 110.

By combining the characteristics of the thermal resin 300 and the TIM pad 400, such as adhesion strength and curability, the present invention provides sufficient cell unit 200 fixing strength while improving removability during maintenance. That is, the thermal resin 300 forms a curable adhesive layer 310 and the TIM pad 400 forms a non-curable adhesive layer 410, and the adhesive strength of the cell unit 200 to the base plate 110 is adjusted as an area ratio between the adhesive area of the thermal resin 300 and the adhesive area of the TIM pad 400. For example, considering the adhesive strength of each of the thermal resin 300 and the TIM pad 400, the adhesive area of the TIM pad 400 can be designed to account for 60 to 90% of the total area of the bottom surface of the cell unit 200, so that the cell unit 200 can be disassembled without applying excessive force.

FIG. 3 is an exemplary illustration of removing the cell unit 200 of FIG. 2 from the battery pack 10. As shown in FIG. 2, the cell unit 200 fixed to the base plate 110 by the curable adhesive layer 310 of the thermal resin 300 and the non-curable adhesive layer 410 of the TIM pad 400, when an upward pulling force is applied, the adhesive force of the curable adhesive layer 310 of the thermal resin 300 and the non-curable adhesive layer 410 of the TIM pad 400 is overcome with a small force, so that the cell unit 200 can be removed without significant damage. It should be noted that the curable adhesive layer 310 of the thermal resin 300 is shown in FIG. 3 as remaining on the cell unit 200 by way of illustration only and is not intended to imply that the cell unit 200 will only separate in the form shown in FIG. 3.

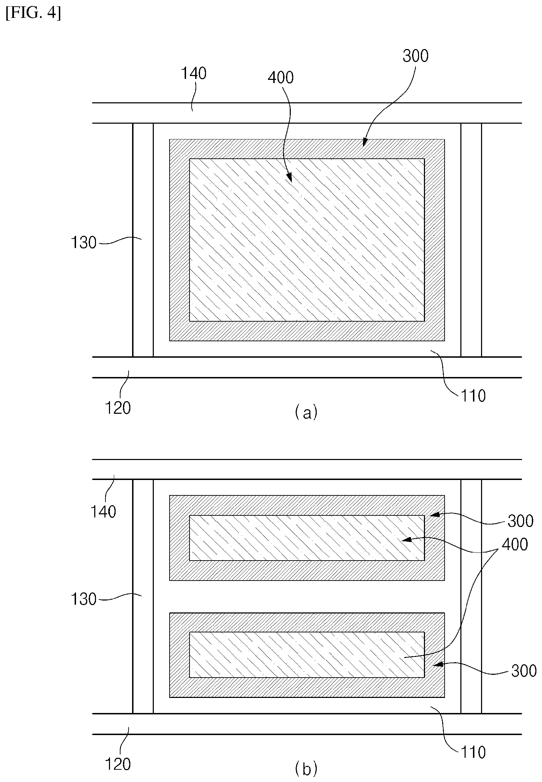

FIG. 4 is an exemplary illustration of an installation structure of thermal resin 300 and TIM pads 400. As shown in (a) of FIG. 4, a single TIM pad 400 may be centrally disposed and the thermal resin 300 may be applied along the perimeter of the TIM pad 400. Alternatively, a pair of TIM pads 400 may be spaced apart, as shown in (b) of FIG. 4, and thermal resin 300 may be applied along each perimeter of each TIM pad 400.

Here, the thermal resin 300 applied along each perimeter of the paired TIM pads 400, as shown in (b) of FIG. 4, may be disconnected from each other. This creates a void in the center region of the bottom surface of the cell unit 200 that is devoid of any adhesive layer. This void can act as a separation initiation point that promotes delamination of the curable adhesive layer 310 formed by the thermal resin 300 when the cell unit 200 is separated. This allows for a more stable separation of the cell unit 200.

### [Second embodiment]

The strength of the adhesion of the cell unit 200 to the base plate 110, which is adjustable as an area ratio between the adhesive area of the thermal resin 300 and the adhesive area of the TIM pad 400, may in some cases require a more robust fixation of the cell unit 200. This may be the case, for example, when the battery pack 10 is used in an environment with frequent vibration. For this purpose, a detachable fixing structure for the cell unit 200 may be added.

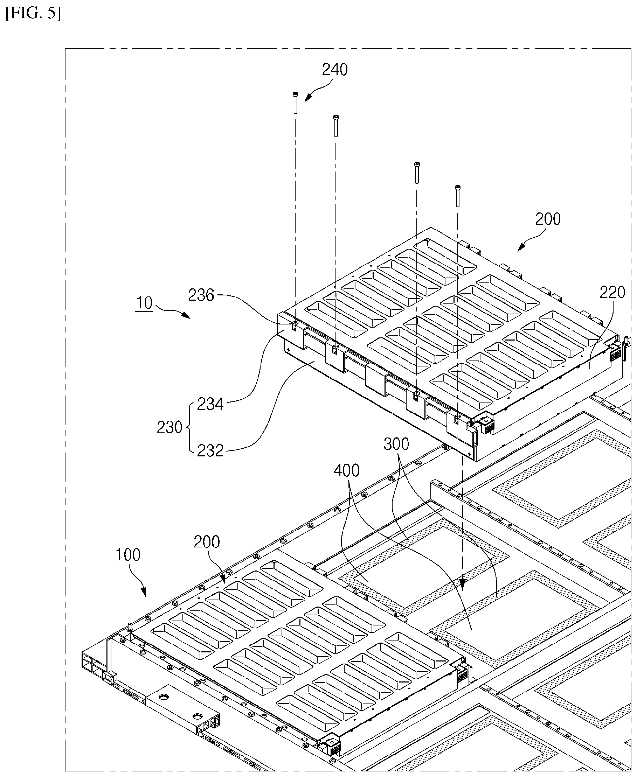

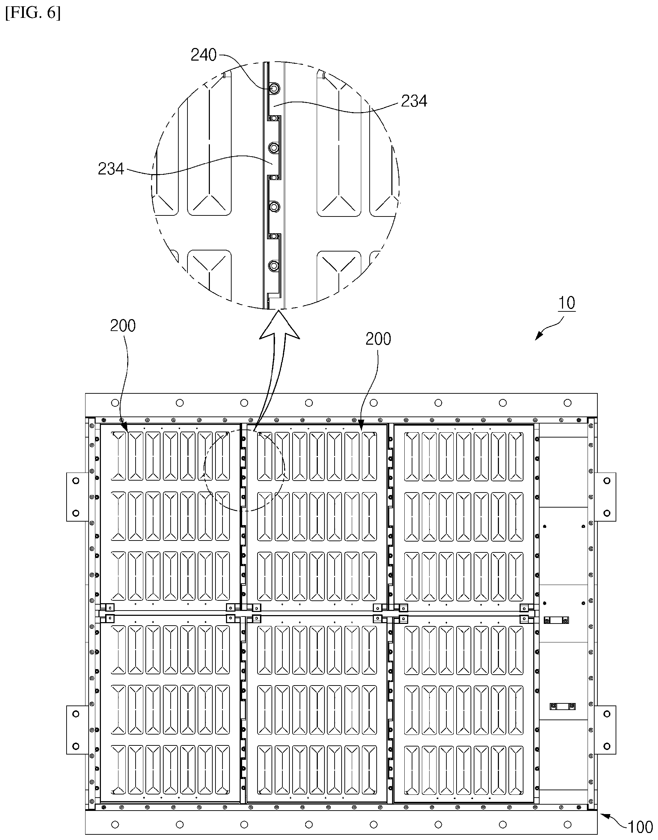

FIG. 5 is a drawing illustrating a mounting structure for a cell unit 200 according to one embodiment of the present invention, and FIG. 6 is a plan view of a battery pack 10 according to the embodiment of FIG. 5.

Referring to FIGS. 5 and 6, the pack case 100 includes a base plate 110, side plates 120 coupled along a perimeter of the base plate 110 to form a receiving space therein, and a cross beam 130 coupled to the base plate 110 to transversely compartmentalize the receiving space inside the base plate 110. Depending on the embodiment, the pack case may further include a center beam 140 that longitudinally compartmentalizes the receiving space inside the base plate 110, such that the receiving space of the pack case may be divided into a grid by the cross beam 130 and the center beam 140, as shown in FIGS. 5 and 6.

Each of the receiving spaces compartmentalized by the cross beams 130 is mounted with a cell unit 200, thereby allowing the battery pack 10 to house a plurality of cell units 200 to meet its design capacity. The cell unit 200 includes a plurality of battery cells 210, and a busbar frame assembly 220 that mechanically and electrically couples to the plurality of battery cells 210 at transverse ends from which leads of the battery cells 210 protrude. The cell unit 200 also includes a side frame 230 that protects the battery cells 210 on both longitudinal sides.

The side frames 230 of adjacent cell units 200 along the longitudinal direction share the upper surface of the cross beams 130 located therebetween and do not overlap each other. For example, in the embodiment shown in the drawings, the side frames 230 include side plates 232 that wrap around the sides of the cell units 200, and support blocks 234 that protrude from the side plates 232. Furthermore, the support blocks 234 of adjacent cell units 200 along the longitudinal direction occupy regions that do not overlap each other on the upper surface of the cross beam 130.

In more detail, the support block 234 of the side frame 230 is a protruding member capable of further supporting and fixing the cell unit 200 against the cross beam 130, such that the cell unit 200 is supported by the support block 234 seated on the upper surface of the cross beam 130. Further, the cell unit 200 is fixed to the cross beam 130 by bolts 240 that vertically penetrate the support block 234. The clamping force of the bolts 240 is applied to the cell unit 200 by the larger diameter head being supported at the mouth of the through-hole 236.

FIG. 6 shows a structure with an entire cell unit 200 mounted within the battery pack 10. The cell units 200 that are adjacent along the longitudinal direction with the cross beam 130 therebetween are supported and fixed to each other while sharing the cross beam 130 between them. For this purpose, the support blocks 234 of the cell units 200 that are adjacent along the longitudinal direction are arranged alternately on the upper surface of the cross beam 130 so as to occupy areas that do not overlap each other.

As shown in the plan view of FIG. 6, the side frames 230 of the cell units 200 having cross beams 130 therebetween, and in particular the support blocks 234, share an upper surface of the cross beam 130 but do not stack on top of each other. Accordingly, in the event of a problem with any one of the cell units 200 within the assembled battery pack 10, only the faulty cell unit 200 can be easily removed upwards without any interference, regardless of the order of assembly.

As such, the battery pack 10 of the present invention allows for maintenance of the battery pack 10 by replacing the faulty cell unit 200, thereby allowing the battery pack 10 to be fully utilized to its designed lifespan without having to dispose of the entire expensive battery pack 10.

As aforementioned, the present disclosure has been described in more detail through the drawings and embodiments. However, since the configuration described in the drawings or embodiments described herein is merely one embodiment of the present disclosure and do not represent the overall technical spirit of the disclosure, it should be understood that the disclosure covers various equivalents, modifications, and substitutions at the time of filing of this application.

### [Description of Reference Numerals]

10: BATTERY PACK
100: PACK CASE
110: BASE PLATE
120: SIDE PLATE
130: CROSS BEAM
140: CENTER BEAM
200: CELL UNIT
210: BATTERY CELL
220: BUSBAR FRAME ASSEMBLY
230: SIDE FRAME
232: SIDE PLATE
234: SUPPORT BLOCK
236: THROUGH-HOLE
240: BOLT
300: THERMAL RESIN
310: CURABLE ADHESIVE LAYER
400: TIM PAD
410: NON-CURABLE ADHESIVE LAYER

## Claims

1. A battery pack comprising:
a pack case including a base plate;
a plurality of cell units mounted on an upper surface of the base plate;
a thermal resin interposed between a bottom surface of each cell unit and the base plate; and
a thermal interface material (TIM) pad interposed between the bottom surface of each cell unit and the base plate to fix the cell unit,
wherein an adhesion of the TIM pad is small compared to an adhesion of the thermal resin, and
wherein the thermal resin and the TIM pad are disposed on different areas of the upper surface of the base plate.

2. The battery pack of claim 1, wherein each thermal resin is applied along a perimeter of a corresponding TIM pad.

3. The battery pack of claim 1, wherein the adhesion strength of the cell unit to the base plate is adjusted as an area ratio between an adhesive area of the thermal resin and an adhesive area of the TIM pad.

4. The battery pack of claim 3, wherein the thermal resin is a curable adhesive layer, and
wherein the TIM pad is a non-curable adhesive layer.

5. The battery pack of claim 3, wherein the adhesive area of the TIM pad occupies 60 to 90% of a total area of the bottom surface of the cell unit.

6. The battery pack of claim 2, wherein, for each cell unit, the TIM pad is provided as a pair of TIM pads, and the pair of TIM pads are spaced apart from each other and disposed on the bottom surface of the cell unit.

7. The battery pack of claim 6, wherein, for each cell unit, the thermal resin is applied along each perimeter of the pair of TIM pads and are isolated from each other.

8. The battery pack of claim 1, wherein the pack case comprises a cross beam coupled to the base plate to transversely compartmentalize a receiving space within the base plate,
wherein each cell unit includes a side frame fixed to the cross beam, and
wherein the side frames of adjacent cell units along a longitudinal direction share an upper surface of the cross beam located therebetween and do not overlap each other up and down.

9. The battery pack of claim 8, wherein each side frame comprises:
a side plate wrapping around a side of the cell unit; and
a support block protruding from the side plate, and
wherein the support blocks of adjacent cell units along the longitudinal direction occupy regions that do not overlap each other on the upper surface of the cross beam.

10. The battery pack of claim 9, wherein the support block is provided as a plurality of support blocks spaced apart from each other, and
wherein the plurality of support blocks of adjacent cell units along the longitudinal direction are arranged alternately on the upper surface of the cross beam.

11. The battery pack of claim 9, wherein each cell unit is fixed to the cross beam by bolts vertically penetrating the support block.
